# EUROPEAN PATENT APPLICATION

(11) **EP 1 028 361 A1**
(43) Date of publication of application: **16.08.2000**
(21) Application number: 99830053.7
(22) Date of filing: 03.02.1999
(51) Int. Cl.: G05B 19/10, G05B 19/042, F24H 9/20, F24D 19/10

(54) **Boiler remote control**

(71) Applicant: IABER S.p.A., I-22053 Lecco Como (IT)
(72) Inventor: Pastorino, Giorgio Ing., Malgrate, Lecco (IT)
(74) Representative: Gandini, Claudio

(57) **Abstract**

A system (10) for the control and adjustment of the operation of a boiler (11) which includes a variety of electrical connections for incoming control signals and outgoing warning signals, including an interface device (15) connected to such variety of electrical connections to detect output signals and supply input signals to the boiler. Through a serial transmission means (18, 19), the interface device (15) exchanges the control and adjustment signals with a remote control board (16) reproducing on own displays (23, 24, 26, 28, 32) the visualization of at least part of the output signals and produces by own control means (21, 22, 25, 27, 34) control signals sent through such serial means to said interface for the production of said input signals to the boiler.

## Description

It is known that modern boilers used for ambient and sanitary water heating need to maintain under control and adjust a number of operating parameters. For instance, it is necessary to set the temperature of the water circulating in the heating plant and of the water circulating in the sanitary plant; similarly it is necessary to set boiler's on-off times.

Moreover lights signaling the correct or incorrect operation of important components of the plant must be visualized, such as for instance burner shutdown, limit temperature exceeded, vent stack obstructed and any other parameter of interest. Generally modern boilers are therefore equipped with a control board including all the controls and signals considered as necessary.

Normally boilers are installed outside the heated rooms or the ambient where sanitary water is used, in order not to encumber, pollute or produce noise in normal living rooms.

Therefore boilers are often relegated to places such as balconies, laundry rooms or anyhow rooms whose access is uncomfortable. Just think for instance to the trouble of going out, in winter, to carry out small control or adjustment operations. In normal boilers however its is not possible to separate the control board from the boiler shell to install it in more accessible places, such as for instance the same living rooms. Actually most controls and indicators present on the board are connected to the boiler by a variety of cables (generally at least one for each adjustment and indication function available) . One cannot think therefore to lay down the necessary connections over long distances.

As a compromise, the generally known technique has chosen to separate from the boiler shell only very few controls and adjustments considered as strictly necessary.

For instance the automatic on-off timer or the burner shutdown indicator. This allows to limit the number of electrical connections to three or four wires thus reducing installation problems and costs.

The general aim of the present invention is to overcome the above troubles by equipping the boiler with an innovative control and adjustment device allowing to position the complete control board in any desired place with a limited cost and possibly to move it as desired even during boiler operation.

In view of such goal, on the basis of this invention, the system for the control and adjustment of the boiler operation has been conceived so as to include a variety of electrical connections for incoming control signals and outgoing warning signals, featuring an interface device connected to such variety of electrical connections to detect output signals and provide input signals to the boiler, through a serial transmission means. The interface device exchanges control and adjustment signals with a control board that can be removed from the boiler and that visualizes on own displays the functions of at least part of the output signals and produces by own control means control signals sent through such serial means to such interface for the production of such input signals to the boiler.

To give a clearer explanation of the innovative principles of this invention and of its advantages as compared to the generally known technique, we are describing hereunder a possible example of system implementation using such principle, complete with drawings. Drawings illustrate the following :
- figure 1 shows the diagram of an innovative boiler control and adjustment system based on this invention;
- figure 2 shows the diagram of a possible implementation of the system of figure 1.

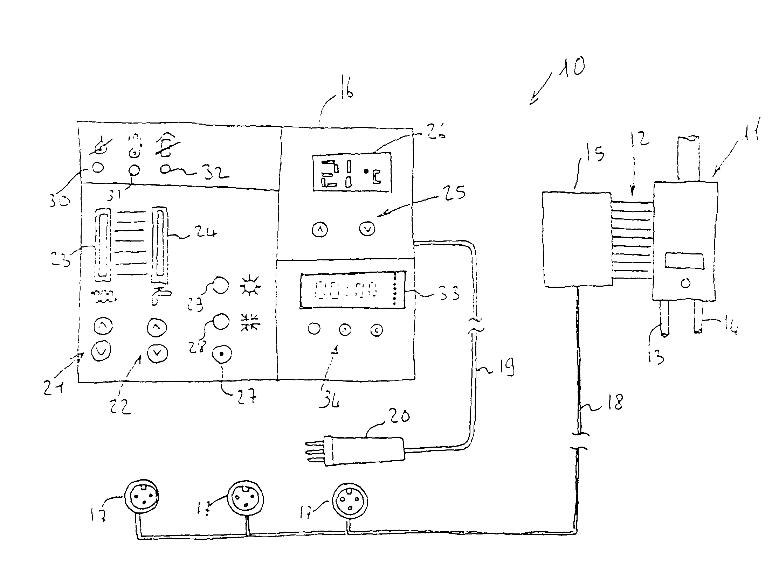

Referring to the figures, figure 1 shows the diagram of a control and adjustment system based on this invention, generally marked with 10. The system includes a boiler 11, essentially based on the generally known technique, and consequently not described nor shown in details, having a variety of electrical connections 12 for incoming control signals and outgoing warning signals. The boiler, in this instance a gas-fired boiler, can supply hot water to a known heating system 14 and to a known sanitary water plant 15.

In the generally known technique, each of the variety of connections 12 is generally connected directly to a control board, which must therefore be installed directly on the boiler due to the high number of conductors forming a complex harness.

Based on the principles of the present invention, the variety of connections 12 is connected to a first processing interface 15, installed in the boiler or very close to it, which communicate serially to a second interface integrated into a remote control board 16, that can be removed from the boiler. Therefore the connection between the control board and interface 15 can be realized with a limited number of conductors. For instance, based on a preferential application of this invention, connection is made through a three-conductors cable: two conductors supply the control board and one provides bi-directional serial transmission. As a further advantage, cable 18 coming out from interface 15 is connected to sockets 17 arranged in parallel and placed where desired, for instance in the various rooms served by the boiler. Considering the limited number of conductors, cable 18 can be laid with relatively low costs and without requiring important installation works, even in the case where sockets 17 are relatively far from the boiler. The control board 16 has in turn a cable 19 for connection to a plug 20 complementary to sockets 17.

Controls and indicators of the functions of boiler 11 are provided on the control board 16. Such controls and indicators can for instance reproduce the functions of the controls and indicators generally placed directly on the boiler, but can also include other functions and even unify the functions generally covered by the few remote controls provided by the known technique.

For instance control board 16 can include two couples of pushbuttons 21, 22 to adjust the temperature of the circulating water in the heating plant 13 and in the sanitary plant 14 respectively. Each couple of pushbuttons 21, 22 can be associated to a display 23, 24 - for instance a LED bar, to show the temperature value set through the respective keys. A further couple of pushbuttons 25 adjust the thermostat operating temperature shown for instance on a digital display, or realize switching among two temperature levels. Such timer can for instance include an alphanumeric display 33, LCD or LED, showing on-off hours and days and control keys 34 to set such hours and days.

It is thus possible to control all the boiler main functions and keep its operation under control without access to the place where the boiler is physically installed. For instance, with sockets installed in various areas of the house, the boiler operation can be controlled by simply inserting the control board plug in the nearest socket.

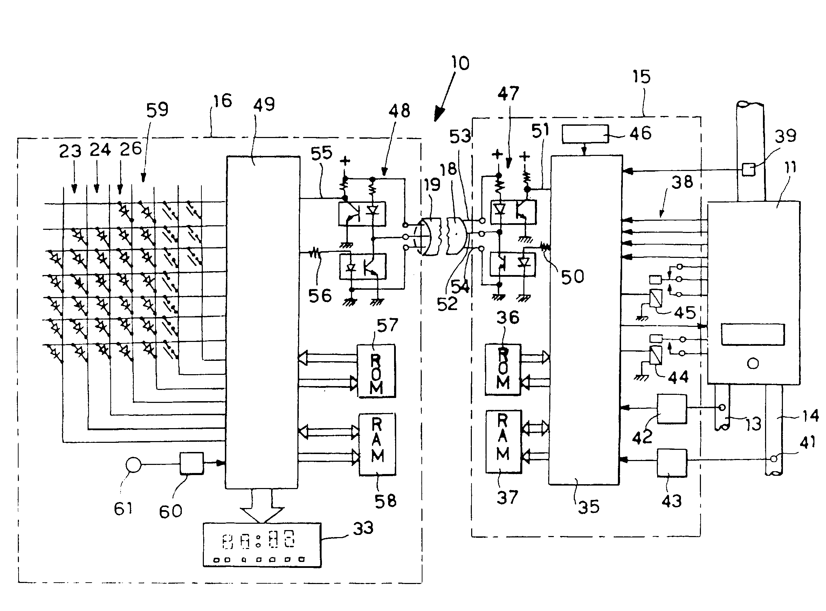

Figure 2 shows the electrical diagram of the possible application of the control system of figure 1.

As shown in figure 2, the interface device 15 includes an electronic circuit consisting of a micro-controller 35 with a ROM memory 36 and a RAM memory 37. The micro-controller has inputs and outputs connected to the variety of connections 12 of the known control and adjustment circuit inside the boiler to control the functions and check the boiler operating condition. We have for instance inputs 38 to which arrive known signals of boiler operation, inputs to which arrive signals from a sensor 39 detecting the obstruction of the vent stack, and inputs to which arrive the values of heating and sanitary water temperature measurements detected by the respective sensors 13, 14 eventually converted into digital form by analogue/digital converters 42, 43.

We also have output for the control of the boiler as for instance relays 44, 45 controlling respectively the boiler start-up and the summer/winter switch.

The interface device includes also the clock and calendar circuits 46 for the execution of stored programs related to the boiler automatic on-off operations.

Moreover the micro-controller has a serial communication output 50 and a serial communication input 51 connected to circuits 47 matching the signal transmission means. For instance in the case of connection to one only bi-directional serial communication conductor, the matching circuit can consist of photo-couplers, connected to match input and output to one only bi-directional transmission conductor.

Other known screening means can also be used. Conductor 52, jointly with supply conductors 53, 54 (drawing voltage from the interface device supply circuits) is connected to the three-conductors cable 18 thus creating communication between interface device 15 and control board 16.

Also cable 19 has three conductors connected to the respective conductors of cable 18 to connect the bi-directional communication conductor and the two supply conductors to the corresponding terminals of the control board. In particular, the bi-directional communication means is connected to matching circuits 48, similar to those available in interface 15 , providing connection of the communication conductor (one only) to the respective serial communication input 55 and output 56, which can be found in micro-controller 49 managing the control board functions.

Micro-controller 49, having ROM memories 57 and RAM memories 58, has input and output gates connected to a matrix 59 controlling pilot lights 28-32, bar displays 23, 24, and digital display 26 and scanning the various control keys of the control board. Moreover, the micro-controller controls the operation of the alphanumeric display 33.

A further input of micro-controller 49 is connected (eventually by means of a analogue/digital converter 60) to a sensor 61 detecting the control board ambient temperature.

Based on the programs stored in ROM memories 36 and 37 (programs that the technician can easily imagine at the light of the descriptions hereunder) the two micro-controllers can talk each other so that settings provided by the control board can be reproduced in the boiler and boiler operating signals can be displayed on the control board panel.

To better explain the concepts behind this invention we are going to describe hereunder a possible operation of the remote control system 10.

If for instance the temperature of the heating water has to be changed, it is sufficient to press the corresponding key 21.

Controller 49, which is scanning continuously the keys matrix, detects the pressure on the key and consequently increases or decreases a variable representing the required temperature stored in memory 58. Upon release of the key, controller 49 sends to controller 35, through serial communication, the data related to the required temperature.

Controller 35 stores such data in its RAM memory 37 and orders the boiler, as known, through connections 12, to bring and maintain the water temperature detected by sensor 40 to the required value. The operation would be similar should the change of the sanitary water temperature be required through keys 22.

Controller 49 also checks the ambient temperature through sensor 61 and compares it to the value stored in its RAM memory by means of keys 25 and shown on display 26. If the value detected by the sensor deviates from the stored value, controller 49 sends a serial communication to controller 35 so that it orders the boiler to bring again the temperature to the set value.

Therefore, to change ambient temperature it is sufficient to press keys 25 and controller 49 changes the value of the required temperature stored in its RAM memory.

Should it be desired to plan time and days for the boiler on-off operations, or for the switch from a temperature level to another, it is sufficient to press keys 34 adjusting the timer.

Controller 49 detects the pressure on the keys and shows on the display the changes made (for instance on-off days and time). When setting is completed, controller 49 sends to controller 35 the serial data of the settings made. Controller 35 stores such data in its RAM memory and consequently controls the boiler on-off operations through connections 12. To calculate the on-off moments, the controller compares the stored data with the clock and calendar data produced by circuit 46.

When key 27 is pressed, the controller detects the fact, consequently sets on and off LEDS 28 and 29 and, at every pressure, sends in sequence to controller 35 the request to switch the boiler from the "winter" condition to the "summer" condition or to put it off.

Controller 35 checks the boiler operation through the status signals it receives by connections 12 and sends the corresponding information to controller 49 to set the various indicators on and off.

Since the serial communication wire is one only, communication between the two controllers can obviously occur in one direction at a time. It is therefore established that controller 35 and controller 49 alternate transmission and reception based on pre-set time intervals. For instance, at regular intervals, controller 49 first sends the status of the controls and thermostat and then takes the listening position to receive from controller 35, in turn switched from listening to transmission, possible status indications, and so on. Serial transmission can be made with any known technique. For instance for any data to be communicated, communications with change of binary level can be used, such as sequence of eight transmission bits preceded by a start bit and followed by a stop bit.

The technician has now very clear how the device can be realized on the basis of this invention and how the preestablished goals have been achieved, providing a boiler remote control and adjustment device. It must be noted that such control and adjustment device can be applied to any boiler. Actually the controller can be programmed in such a way that a known boiler circuit is controlled as if a usual control panel realized with the known technique and mounted on the boiler be connected to connections 12.

The control board can be moved as necessary from one socket to another thus having it always available within hands reach.

Obviously the above description of an application using the innovative principles of this invention is given only to exemplify such innovative principles and must not therefore be considered as a limit to the sphere of the patent-right herein claimed.

For instance, in case one only connection is required between the control board and the interface, sockets can be eliminated and cable 19 can simply be an extension of cable 18. In case of a stationary installation, the control board can be wall mounted. In case of autonomy of the control board supply as compared to interface, the connecting cable can be reduced to two conductors. The boiler can also provide a connecting socket for the control board, which can thus be easily mounted on the boiler itself with the possibility of removing it. Finally one can also think of replacing the cable with any other means of transmission, using adequate interfaces 47 and 48. Connection can for instance be made along optic fibers or via radio.

## Claims

1. A system for the control and adjustment of the operation of a boiler which includes a variety of connections for incoming control signals and outgoing warning signals and features an interface device connected to such variety of electrical connections to detect output signals and supply input signals to the boiler. The interface device exchanges through a serial transmission means control and adjustment signals with a control panel that can be removed from the boiler reproducing on own displays the visualization of functions for at least part of the output signals and producing by own control means control signals sent through said serial means to said interface for the production of said input signals to the boiler.

2. A system as per claim no. 1 where the interface includes a first micro-controller circuit.

3. A system as per claim no. 1 where the control panel includes a second micro-controller circuit.

4. A system as per claim no. 1, where the transmission means consists of a signals conductor cable.

5. A system as per claim no. 4, where the conductor cable can be connected to a variety of connection sockets with a complementary control board plug.

6. A system as per claim no. 2, where the first micro-controller circuit is connected to the transmission means by circuits matching the means.

7. A system as per claim no. 3, where the second micro-controller circuit is connected to the transmission means by circuits matching the means.

8. A system as per claim no. 1, where visualization means include displays such as indicators of the boiler conditions, displays of the boiler's automatic on-off times, display of the ambient temperature set in the boiler, displays of the temperature levels required for the hot water produced by the boiler.

9. A system as per claim 1, where control means include control keys such as keys to increase and decrease the required temperature of the hot water produced by the boiler, keys to increase and decrease the ambient temperature set in the boiler, keys to adjust the boiler's automatic on-off times, keys to start and stop the boiler and to select the operation modes.

10. A system as per claims no. 3 and no. 8, where at least part of the visualization means are matrix-controlled by the second micro-controller.

11. A system as per claims no. 3 and no. 9, where at least part of the control means are matrix scanned by the second micro-controller.

12. A system as per claims nos. 4, 6 and 7, where matching circuits are photo-couplers.

13. A system as per claim no. 4, where the signal conductor cable is associated to the control board supply conductors on the interface side.

14. A system as per claim no 1, where the control board includes sensors which detect the ambient temperature and compare it to the preset values in order to send to the interface corresponding signals to start and stop the boiler.
